# EUROPEAN PATENT APPLICATION

(11) **EP 2 933 152 A1**
(43) Date of publication of application: **21.10.2015**
(21) Application number: 12890138.6
(22) Date of filing: 13.12.2012
(51) Int. Cl.: B60R 21/00

(54) **PARKING ASSISTANCE DEVICE**

(71) Applicant: TOYOTA JIDOSHA KABUSHIKI KAISHA, Toyota-shi, Aichi-ken, 471-8571 (JP)
(72) Inventor: SATONAKA Hisashi, Toyota-shi Aichi 471-8571 (JP); ISHIJIMA Hironobu, Toyota-shi Aichi 471-8571 (JP); YAMAZAKI Eriko, Toyota-shi Aichi 471-8571 (JP); HATA Keisuke, Toyota-shi Aichi 471-8571 (JP); MIYOSHI Hidehiko, Toyota-shi Aichi 471-8571 (JP)
(74) Representative: TBK
(86) International application number: PCT/JP2012/082418
(87) International publication number: WO 2014/091613

(57) **Abstract**

A parking assistance device includes an obstacle detection unit configured to detect an obstacle around a vehicle, a parking point detection unit configured to detect a parking target point where the vehicle can be parked based on the result of the obstacle detection, and a parking assistance control unit configured to guide the vehicle from a parking start point to the parking target point according to a guidance route based on the result of the obstacle detection and the result of the parking target point detection. In a case where a traveling of the vehicle is detected during a period of time from a time when the vehicle reaches the parking start point to a time when a shift range is changed, the parking assistance control unit does not execute the guidance of the vehicle.

## Description

### Technical Field

The present invention relates to a parking assistance device configured to assist a driver of a vehicle in a parking operation.

### Background Art

In the related art, with regard to a parking assistance device, an automatic steering system is known, in which vehicle wheels are automatically steered based on a relationship of norm steering angle corresponding to a traveling distance of the vehicle, as disclosed in Japanese Unexamined Patent Application Publication No. 10-167104, for example.

### Citation List

### Patent Literature

[Patent Literature 1] Japanese Unexamined Patent Application Publication No. 10-167104

### Summary of Invention

### Technical Problem

Incidentally, in a parking assistance device in the related art, in a case where a vehicle moves backward due to a slope of the road surface during the parking assistance control, since the vehicle may be mistakenly guided due to a misunderstanding that the vehicle is traveling forward, there is a problem in that an appropriate parking assistance cannot be performed.

For this reason, in the above-described automatic steering system, the forward or backward traveling of the vehicle is detected using a specialized device configured to detect a traveling direction of the vehicle, and in a case where the backward traveling of the vehicle is detected, the inappropriate parking assistance can be suppressed by notifying a driver of the detection result or stopping the guidance of the vehicle. However, since the device configured to detect the traveling direction of the vehicle is expensive, it is difficult to mount the above-described automatic steering system on the vehicle at a low cost.

Therefore, the present invention is to provide a parking assistance device in which the inappropriate parking assistance can be suppressed at a low cost.

### Solution to Problem

A parking assistance device according to the present invention includes an obstacle detection unit configured to detect an obstacle around a vehicle, a parking point detection unit configured to detect a parking target point where the vehicle can be parked based on the result of the obstacle detection, and a parking assistance control unit configured to guide the vehicle from a parking start point to the parking target point according to a guidance route based on the result of the obstacle detection and the result of the parking target point detection. In a case where a traveling of the vehicle is detected during a period of time from a time when the vehicle reaches the parking start point to a time when a shift range is changed, the parking assistance control unit does not execute the guidance of the vehicle.

In this way, in a case where the traveling of the vehicle is detected during a period of time from a time when the vehicle reaches the parking start point to a time when the shift range is changed, since the guidance of the vehicle is not executed, it is possible to suppress the inappropriate parking assistance at a low cost without detecting a traveling direction of the vehicle.

In a case where the guidance of the vehicle is not executed, the parking assistance control unit may notify a driver of the fact that the guidance of the vehicle is not executed.

The change of the shift range may be a change from a forward shift range to a backward shift range or a change from a backward shift range to a forward shift range.

The traveling of the vehicle may be a forward traveling or a backward traveling of the vehicle.

### Advantageous Effects of Invention

According to the present invention, it is possible to provide a parking assistance device in which the inappropriate parking assistance can be suppressed at a low cost.

### Brief Description of Drawings

Fig. 1 is a block diagram illustrating a parking assistance device in an embodiment of the present invention.
Fig. 2 is a flow chart illustrating an operation of the parking assistance device.
Figs. 3A and 3B are diagrams illustrating a situation in which the parking assistance is appropriately performed and a situation in which the parking assistance is not appropriately performed.
Figs. 4A and 4B are diagrams illustrating a situation in which the inappropriate parking assistance is suppressed at the time of backward parking.
Figs. 5A and 5B are diagrams illustrating a situation in which the inappropriate parking assistance is suppressed at the time of forward parking.

### Description of Embodiments

Hereinafter, an embodiment of the present invention will be described with reference to the drawings attached hereto. In the description of the drawings, the same signs will be assigned to the same elements, and the description thereof will not be repeated.

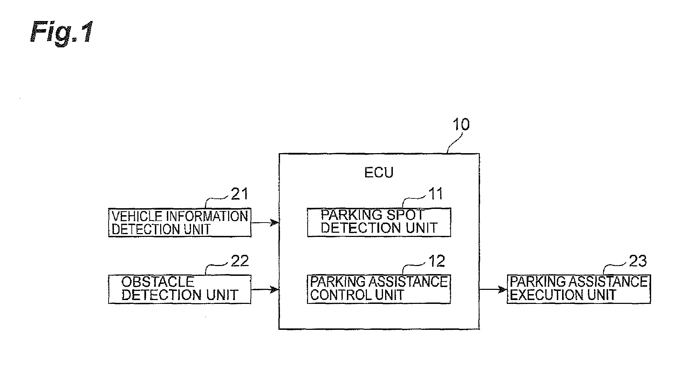

Fig. 1 is a block diagram illustrating a parking assistance device in an embodiment of the present invention. The parking assistance device is mounted on a vehicle, and is configured mainly with an electronic control unit 10 (hereinafter, abbreviated as ECU 10) configured to perform parking assistance processing as illustrated in Fig. 1.

A vehicle information detection unit 21 configured to detect vehicle information is connected to the ECU 10. For example, a shift sensor, a steering sensor, a vehicle wheel speed sensor, an accelerator sensor, and a brake sensor are used as the vehicle information detection unit 21. The shift sensor is a sensor configured to detect a shift range set by a shift operation. The steering sensor is a sensor configured to detect a steering angle set by a steering operation. The vehicle wheel speed sensor is a sensor configured to detect a rotation or a rotation speed of a vehicle wheel. The accelerator sensor is a sensor configured to detect an amount of depression by an accelerator pedal. The brake sensor is a sensor configured to detect an amount of depression by a brake pedal.

In addition, an obstacle detection unit 22 configured to detect an obstacle around the vehicle is connected to the ECU 10. For example, a lateral sensor and a proximity sensor are used as the obstacle detection unit 22. The lateral sensor is a sensor configured to detect an obstacle in the lateral side of the vehicle, and for example, ultrasonic sensors installed on the right and left side surfaces of the vehicle body are used. The proximity sensor is a sensor configured to detect an obstacle that approaches the vehicle, and for example, ultrasonic sensors installed on the front and rear surfaces of the vehicle body or the front and rear corners of the vehicle body are used.

In addition, a parking assistance execution unit 23 configured to perform the parking assistance is connected to the ECU 10. For example, a display, a speaker, a vibrator, a steering control device, a brake control device, and an engine control unit are used as the parking assistance execution unit 23. The parking assistance execution unit 23 executes the parking assistance by a notification to the driver, and/or the control intervention for a steering device, a brake device, an engine device.

The ECU 10 functions as a parking point detection unit 11 and a parking assistance control unit 12. The ECU 10 is mainly configured with a CPU, ROM, and RAM, and realizes the functions of the parking point detection unit 11 and the parking assistance control unit 12 by executing a program by the CPU. The functions of the parking point detection unit 11 and the parking assistance control unit 12 may be realized by two or more ECUs.

The parking point detection unit 11 detects a parking target point existing around the vehicle. The parking point detection unit 11 detects a parking target point where the vehicle can be parked based on the result of the obstacle detection. Here, the parking target point means a targeted point when parking the vehicle. The parking target point is detected by detecting a parking area existing around the vehicle. The parking point detection unit 11 detects a location situation of the obstacle around the parking target point.

The parking assistance control unit 12 controls the parking assistance for guiding the vehicle to the parking target point. The parking assistance control unit 12 guides the vehicle from a parking start point to the parking target point according to a guidance route based on the result of the obstacle detection and the result of the parking target point detection. The parking assistance control unit 12 sets the guidance route from the parking start point to the parking target point based on the location situation of the obstacle around the parking target point. The parking assistance control unit 12 generates guidance information for guiding the vehicle according to the guidance route. The guidance information represents a relationship between a traveling distance from the parking start point and an adjustment amount of the steering angle. The parking assistance control unit 12 guides the vehicle to the parking target point based on the guidance information, vehicle information, and the result of the obstacle detection.

In a case where the traveling of the vehicle is detected during a period of time from the time when the vehicle reaches the parking start point to the time when the shift range is changed, the parking assistance control unit 12 does not perform the guidance of the vehicle. Here, the parking start point means a point where the guidance route starts, for example, a turning point or the like where the traveling direction of the vehicle changes. The change of the shift range means the changes, for example, from forward (L range or D range) to backward (R range), or from backward (R range) to forward (L range or D range). The changes of the shift range may be a change from N range to the ranges other than N range, or a change from the ranges other than N range to the N range. The traveling of the vehicle means the forward traveling or the backward traveling.

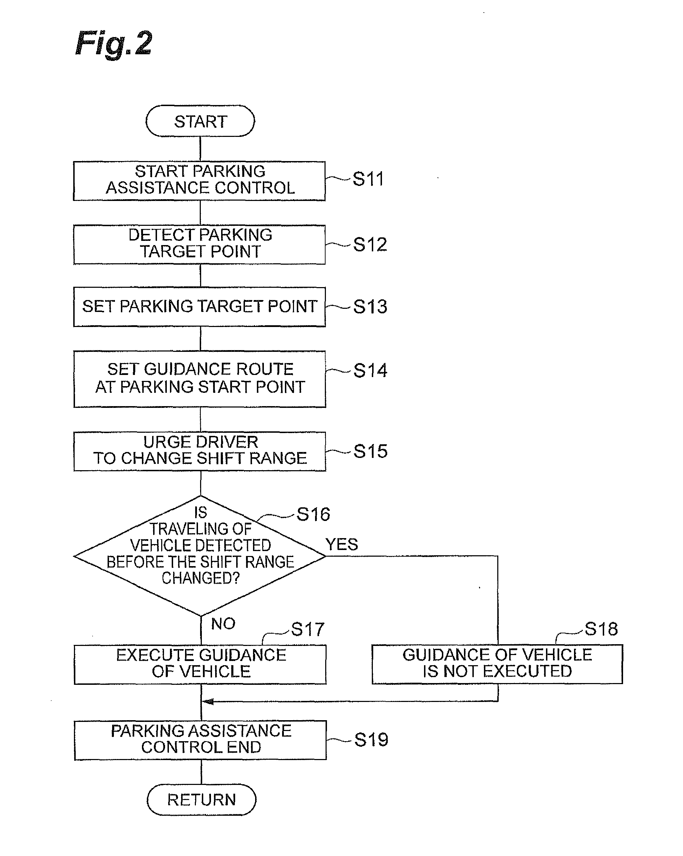

Fig. 2 is a flow chart illustrating an operation of the parking assistance device. The parking assistance device, particularly, the ECU 10 of the parking assistance device, executes the parking assistance processing illustrated in Fig. 2.

As illustrated in Fig. 2, the parking assistance control unit 12 starts the parking assistance control in response to an ON operation of a control start switch (S11).

The parking point detection unit 11 detects a parking target point existing around the vehicle (S12). The detection of the parking target point is performed by detecting an obstacle around the vehicle from the vehicle in forward or backward traveling at a low speed and determining the existence of a parking space around the vehicle. The detection of the parking target point is performed using at least one of the lateral sensor or the proximity sensor. The detection of the parking target point may be performed after the driver designates a direction of detecting the parking target point, for example, the right or left direction of the vehicle. In addition, the parking point detection unit 11 detects the location situation of the obstacle around the parking target point.

The parking assistance control unit 12 sets the parking target point based on the detection result (S13). When the parking target point is set, the driver stops the vehicle at the parking start point. The stopping of the vehicle may be performed at the time point when the parking target point is detected, or may be performed after the vehicle travels forward or backward to the parking start point which is set based on the location situation of the obstacle around the parking target point at a low speed.

The parking assistance control unit 12 sets the guidance route from the parking start point to the parking target point (S 14). The guidance route is set based on the location situation of the obstacle and a specification of the vehicle (for example, a vehicle body dimension, a turning ability, or the like). In addition, the parking assistance control unit 12 generates guidance information for guiding the vehicle according to the guidance route.

When a preparation for guiding the vehicle is completed, the parking assistance control unit 12 urges the driver to change the shift range which is a signal for starting the guidance (S15). Then, it is determined whether or not the traveling of the vehicle is detected before the shift range is changed (S16). The traveling of the vehicle is detected based on, for example, a rotation state (regardless of the rotation direction) of the vehicle wheels detected by the vehicle wheel speed sensor, a position change of the vehicle detected by a GPS sensor, or other methods.

In a case where the traveling of the vehicle is not detected before the shift range is changed ("No" in S16), the parking assistance control unit 12 executes the guidance of the vehicle to the parking target point (S17).

During the guidance of the vehicle, an automatic steering of the vehicle wheels is performed based on, for example, the guidance information while the vehicle is caused to travel backward or forward at a low speed. The automatic steering is performed by automatically adjusting the steering angle according to the traveling distance from a parking start position. During the guidance of the vehicle, the traveling speed of the vehicle traveling backward or forward is adjusted in response to the operation of the accelerator pedal or the brake pedal, and a notification of the state of approaching the obstacle is given to the driver or the vehicle is stopped based on the result of the obstacle detection.

The guidance of the vehicle ends when the vehicle reaches the parking target point. When the guidance of the vehicle ends, the vehicle stops and the automatic steering of the vehicle wheels stops. Then, the parking assistance control unit 12 ends the parking assistance control according to the ending of the guidance of the vehicle (S19). When the vehicle stops at the parking target point, a parking brake is manually or automatically operated and then, the vehicle is parked.

On the other hand, in a case where the traveling of the vehicle is detected before the shift range is changed ("Yes" in S16), the parking assistance control unit 12 does not execute the parking assistance control, that is, the guidance of the vehicle (S18). In addition, a notification that the guidance of the vehicle is not performed may be given to the driver. By the cancellation of the guidance of the vehicle, the brake is operated, and then, the vehicle stops at the present position. Then, the parking assistance control unit 12 ends the parking assistance control according to the cancellation of the guidance of the vehicle (S119).

Here, the traveling of the vehicle (forward or backward) during a period of time from the time when the vehicle reaches the parking start point to the time when the shift range is changed is regarded as a traveling (movement) of the vehicle against the driver's intention, or as an indication of the driver's intention to release a driving assistance control.

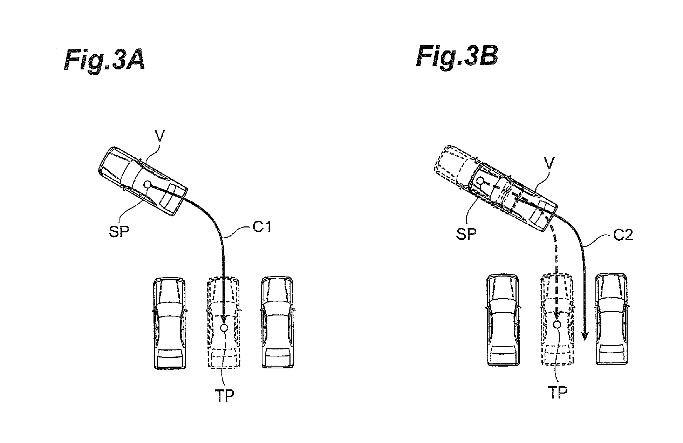

Figs. 3A and 3B are diagrams illustrating a situation in which the parking assistance is appropriately performed and a situation in which the parking assistance is not appropriately performed. In Fig. 3A, a guidance route C1 set at a parking start point SP at the time of backward parking on a downhill slope toward the rear direction of a vehicle, is illustrated. In Fig. 3B, a guidance route C2 in a case where a vehicle V travels backward before the shift range is changed due to a slope of the road surface, is illustrated.

In the situation illustrated in Fig. 3A, since the vehicle V is positioned at the parking start point SP, the vehicle V is appropriately guided to a parking target point TP by the vehicle V being guided according to the guidance route C1. On the other hand, in the situation illustrated in Fig. 3B, since the vehicle V moved backward from the parking start point SP, the vehicle V is not appropriately guided to the parking target point TP by the vehicle V being guided according to the guidance route C2.

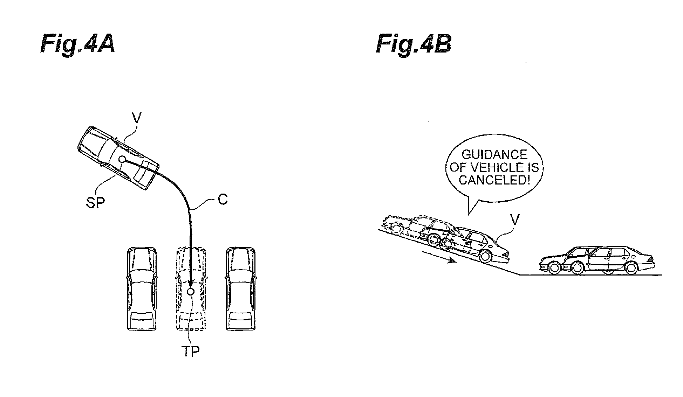

Figs. 4A and 4B are diagrams illustrating a situation in which the inappropriate parking assistance is suppressed at the time of backward parking. In Fig. 4A, a guidance route C set at the parking start point SP at the time of backward parking on the downhill slope toward the rear direction of a vehicle, is illustrated. In a case where the traveling of the vehicle V is detected before the shift range is changed to R range, a situation in which the guidance of the vehicle V is cancelled is illustrated in Fig. 4B along with the notification given to the driver. The same description will be applicable to a case where the vehicle V travels forward at the time of backward parking on the downhill slope toward the front direction of a vehicle, or a case of parallel parking.

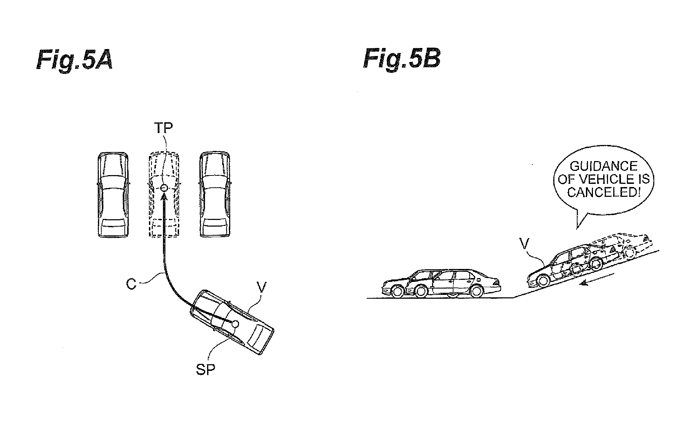

Figs. 5A and 5B are diagrams illustrating a situation in which the inappropriate parking assistance is suppressed at the time of forward parking. In Fig. 5A, a guidance route C set at the parking start point SP at the time of forward parking on the downhill slope toward the front direction of a vehicle, is illustrated. In a case where, for example, the traveling of the vehicle V is detected before the shift range is changed to D range, a situation in which the guidance of the vehicle V is cancelled is illustrated in Fig. 5B along with the notification given to the driver. The same description will be applicable to a case where the vehicle V travels backward at the time of forward parking on a downhill slope toward the rear direction of a vehicle, or the case of parallel parking.

As described above, according to the parking assistance device in the embodiment of the present invention, in a case where the traveling of the vehicle is detected during a period of time from the time when the vehicle reaches parking start point to the time when the shift range is changed, since the guidance of the vehicle is not executed, it is possible to suppress the inappropriate parking assistance at a low cost without detecting a traveling direction of the vehicle.

The embodiment described above is the best mode of embodiment of the parking assistance device in the present invention and the parking assistance device in the present invention is not limited to that described in the present embodiment. The parking assistance device in the present invention may be a device modified from the parking assistance device in the present embodiment, or may be a device applied to other devices without departing from the spirit of the present invention disclosed in each of the Claims.

For example, in the embodiment described above, the vehicle is guided by the automatic steering. However, the embodiment in which the vehicle is guided by a manual steering can be assumed as well. In the embodiment, when the vehicle is guided by a parking drive announcement to the driver using video information or voice information, in a case where the traveling of the vehicle is detected during a period of time from the time when the vehicle reaches the parking start point to the time when the shift range is changed, the guidance of the vehicle is not executed.

### Reference Signs List

- 10: ECU
- 11: PARKING POINT DETECTION UNIT
- 12: PARKING ASSISTANCE CONTROL UNIT
- 21: VEHICLE INFORMATION DETECTION UNIT
- 22: OBSTACLE DETECTION UNIT
- 23: PARKING ASSISTANCE EXECUTION UNIT

## Claims

1. A parking assistance device comprising:
an obstacle detection unit configured to detect an obstacle around a vehicle;
a parking point detection unit configured to detect a parking target point where the vehicle can be parked based on the result of the obstacle detection; and
a parking assistance control unit configured to guide the vehicle from a parking start point to the parking target point according to a guidance route based on the result of the obstacle detection and the result of the parking target point detection,
wherein, in a case where a traveling of the vehicle is detected during a period of time from a time when the vehicle reaches the parking start point to a time when a shift range is changed, the parking assistance control unit does not execute the guidance of the vehicle.

2. The parking assistance device according to Claim 1,
wherein, in a case where the guidance of the vehicle is not executed, the parking assistance control unit notifies the driver of the fact that the guidance of the vehicle is not executed.

3. The parking assistance device according to Claim 1 or 2,
wherein the change of the shift range is a change from a forward shift range to a backward shift range or a change from a backward shift range to a forward shift range.

4. The parking assistance device according to any one of Claim 1 to 3,
wherein the traveling of the vehicle is a forward traveling or a backward traveling of the vehicle.
